(19) Europäisches Patentamt
European Patent Office
Office européen des brevets

(11) EP 1 511 110 A2

(12) # EUROPÄISCHE PATENTANMELDUNG

(43) Veröffentlichungstag:
**02.03.2005 Patentblatt 2005/09**

(51) Int Cl.[7]: **H01M 8/06**, H01M 8/04, H01M 8/10

(21) Anmeldenummer: **04015436.1**

(22) Anmeldetag: **01.07.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **26.08.2003 DE 10339079**

(71) Anmelder: **FORSCHUNGSZENTRUM JÜLICH GMBH**
**52425 Jülich (DE)**

(72) Erfinder:
- **Au, Siu Fai, Dr.**
  **52428 Jülich (DE)**
- **Blum, Ludger, Prof. Dr.**
  **52428 Jülich (DE)**
- **Menzer, Reinhard**
  **52428 Jülich (DE)**
- **Riensche, Ernst, Dr.**
  **52428 Jüllich (DE)**

(54) **Verfahren zur Erzeugung elektrischer Energie mit Hilfe einer Festelektrolyt-Brennstoffzelle**

(57) Die Erfindung betrifft ein Verfahren zur Erzeugung von elektrischer Energie mit Hilfe einer Festelektrolyt-Brennstoffzelle (SOFC), die mit wasserstoffhaltigem Brennstoff betrieben wird und bei dem aus dem Anodenabgasstrom, umfassend wenigstens $H_2$ und $CO_2$, das $CO_2$ weitgehend durch Verflüssigung entfernt wird. Das Verfahren ist dadurch gekennzeichnet, dass nach der Verflüssigung des $CO_2$ das verbliebene Restgas oxidiert wird.

Das Restgas kann dabei sowohl in einer elektrochemischen Nachverbrennung mit Sauerstoff weitgehend oder vollständig oxidiert werden, gegebenenfalls zusammen mit zusammen mit dem Kathodenabgas, oder aber auch in die SOFC zurückgeführt werden.

Eine zur Durchführung des Verfahrens geeignete Vorrichtung umfasst eine Festelektrolyt-Brennstoffzelle und eine $CO_2$-Verdichtungs-/Verflüssigungseinheit, wobei eine Rückführung der Restgase aus der $CO_2$-Verdichtungs-/Verflüssigungseinheit in die SOFC vorgesehen ist. Alternativ weist eine solche Vorrichtung eine Festelektrolyt-Brennstoffzelle, eine $CO_2$-Verdichtungs-/Verflüssigungseinheit sowie einen Nachbrenner auf, wobei der Nachbrenner der $CO_2$-Verdichtungs-/Verflüssigungseinheit nachgeschaltet ist.



Printed by Jouve, 75001 PARIS (FR)

## Beschreibung

Die Erfindung betrifft ein Verfahren zur Erzeugung von elektrischer Energie mit Hilfe einer Brennstoffzelle, insbesondere einer Festelektrolyt-Brennstoffzelle (SOFC). Ferner betrifft die Erfindung eine Vorrichtung zur Durchführung des vorgenannten Verfahrens.

Stand der Technik

Eine Brennstoffzelle ist eine elektrochemische Zelle, die kontinuierlich die chemische Energie eines Brennstoffs und eines Oxidationsmittels in elektrische Energie umwandelt.

Eine Brennstoffzelle weist eine Kathode, einen Elektrolyten sowie eine Anode auf. Der Kathode wird ein Oxidationsmittel, z. B. Luft und der Anode wird ein Brennstoff, z. B. Wasserstoff zugeführt.

Mehrere Brennstoffzellen werden in der Regel zur Erzielung großer elektrischer Leistungen durch verbindende Elemente elektrisch und mechanisch miteinander verbunden. Mit Hilfe von bipolarer Platten entstehen übereinander gestapelte, elektrisch in Serie geschaltete Brennstoffzellen. Diese Anordnung wird Brennstoffzellenstapel genannt.

Verschiedene Brennstoffzellentypen sind bekannt, so beispielsweise die Festelektrolyt-Brennstoffzellen oder auch die Polymer-Elektrolyt-Brennstoffzellen.

Die SOFC-Brennstoffzelle wird auch Hochtemperaturbrennstoffzelle genannt, da ihre Betriebstemperatur bis zu 1000 °C beträgt. An der Kathode einer Hochtemperaturbrennstoffzelle bilden sich in Anwesenheit des Oxidationsmittels Sauerstoffionen. Die Sauerstoffionen passieren den Elektrolyten, der beispielsweise aus Yttrium und Zirkonium besteht, und rekombinieren auf der Anodenseite mit dem vom Brennstoff (reines $H_2$ oder Wasserstoffhaltiges Brenngas, wie beispielsweise $CH_4$) stammenden Wasserstoff zu Wasser. Mit der Rekombination werden Elektronen freigesetzt und so elektrische Energie erzeugt.

Die Gesamtreaktion an der Kathode verläuft wie folgt:

$$\tfrac{1}{2}\,(a+b)\ \mathbf{O_2} + 2\,(a+b)\ \mathbf{e^-} \rightarrow (a+b)\ \mathbf{O_2^{--}}$$

Die Reaktion an der Anode lautet:

$$a\ \mathbf{H_2} + b\ \mathbf{CO} + (a+b)\ \mathbf{O_2^{--}} \rightarrow a\ \mathbf{H_2O} + b\ \mathbf{CO_2} + 2(a+b)\ \mathbf{e^-}$$

Als Brennstoff kann unter anderem Methan oder Methanol vorgesehen werden. Die genannten Brennstoffe werden durch Reformierung oder Oxidation u. a. in Wasserstoff oder wasserstoffreiches Gas umgewandelt. Die Reformierung kann sowohl außerhalb als auch innerhalb (interne) Reformierung stattfinden. Im folgenden soll mit dem Begriff SOFC sowohl eine einzelne Festelektrolyt-Brennstoffzelle als auch ein daraus aufgebauter Brennstoffzellenstapel verstanden werden.

Sofern nicht reiner Wasserstoff als Brennstoff eingesetzt wird, weist das Abgas aus dem Anodenraum in der Regel $CO_2$ und Wasser in Form von Wasserdampf auf. Konzeptstudien zeigen, dass die SOFC-Technologie bei gewissen Modifikationen in der Prozessführung zu einem $CO_2$-freien Kraftwerk führen kann. Dies ist insbesondere im Rahmen einer Null-Emissionsprozessführung wünschenswert.

Bei der SOFC trennt der Elektrolyt den Sauerstoff vom Luft-Stickstoff in situ, sodass die Reaktionsprodukte $H_2O$ und $CO_2$ zunächst nicht mit $N_2$ vermischt sind. Allerdings ist die elektrochemische Umsetzung in der Regel nicht vollständig. Typischerweise werden Brennstoffnutzungsgrade von etwa 85 % erreicht.

Für eine $CO_2$-Deponierung wird zunächst $CO_2$ verflüssigt. Dies geschieht mit Hilfe einer Kompression auf Drücke über 60 bar. Bekanntermaßen ist dieses Verfahren aber nur dann praktikabel, wenn die gasförmigen Verunreinigungen gering sind (unter ca. 10 mol-%).

Bei der konventionellen Nachverbrennung des nicht umgesetzten Brennstoffes wird mit der Luft $N_2$ in das Anodenabgas eingeschleust, und zwar in erheblichem Maße. Daher ist bei konventionellen Kraftwerken eine aufwendige Trennung von $CO_2$ und $N_2$, z. B. mit chemischen Wäschen, erforderlich, bevor das $CO_2$ verflüssigt werden kann. Ein Verfahren zur Trennung von $CO_2$ und $N_2$ ist beispielsweise in EP 482 222 Al beschrieben.

Bei der SOFC-Technik lässt sich das $N_2$-Problem durch eine im Prinzip einfache Modifikation der Prozessführung lösen. Der SOFC wird eine Oxidation mit reinem Sauerstoff nachgeschaltet. Diese Oxidation kann beispielsweise in einer elektrochemischen Nachverbrennungsstufe durchgeführt werden. In der Literatur werden dabei unterschiedliche Verfahrensweisen unterschieden. Bei den nachstehend zunächst aufgeführten beiden Varianten kann die elektrochemische Oxidation mit $O_2$ prinzipiell bis zu 100 % fortschreiten. $N_2$ wird dann also nicht mehr eingeschleust.

Elektrochemische Nachverbrennung mit einer Sauerstoffpumpe

Die Anordnung besteht aus einem Brennstoffzellenbündel mit Elektroden und Elektrolyt. Hier wird elektrische Energie von außen zugeführt, um den $O_2$-Fluß zu erhöhen. Die anzulegende negative Spannung liegt im Bereich einiger hundert mV, kommt also dem Betrage nach der typischen SOFC-Zellspannung (ca. 800 mV) nahe. Dadurch wird ein hoher energetischer Eigenbedarf der Anlage verursacht. Dies führt nachteilig zu verminderten elektrischen Netto-Wirkungsgraden der Anlage.

Elektrochemische Nachverbrennung mit $O_2$ unter Einsatz von Mischleitern

Bei dieser Verfahrensführung werden das Anoden- und das Kathodenabgas in einem Reaktor getrennt an beiden Seiten einer sauerstoffleitenden Membrane vorbeigeleitet. Der Sauerstoff des Kathodengases permeiert selektiv auf die Anodenabgasseite und führt dort zur Oxidation des $H_2$ und des CO. In einem solchen Mischleiter können auch noch beträchtliche $O_2$-Flüsse realisiert werden, da keine elektrische Leistung gefordert wird. Der Reaktor mit der Sauerstoff-leitenden Membran ist nach außen elektrisch neutral (Anordnung ohne Elektroden), kann also nicht zur Stromproduktion beitragen. Eine solche Anordnung ist beispielsweise aus US 6,432,565 B1 bekannt.

Aktiver elektrochemischer Nachbrenner

Als Ausführungsform des aktiven elektrochemischen Nachbrenners ist bekannt, eine weitere SOFC nachzuschalten, die bei geringerer Stromdichte als die Haupt-SOFC betrieben wird, da sie im Bereich niedriger $H_2$-Konzentrationen arbeitet. Der Vorteil ist hierbei, dass ein sehr hoher elektrischer Anlagen-Wirkungsgrad erreicht werden kann. Deshalb ist diese Verfahrensvariante äußerst attraktiv.

Theoretisch wünschenswert wäre eine Brennstoffumsetzung von 100 % in der Nachbrennerzelle. In der Praxis ist bislang allerdings auch nach der zweiten SOFC noch kein vollständiger Brennstoffumsatz erreichbar, so dass in der Regel zusätzlich eine konventionelle Nachverbrennung mit Luft erfolgt. Erst danach folgt üblicherweise die $CO_2$-Kompression. Der nicht vollständige Brennstoffumsatz liegt u. a. daran, dass bei Brennstoffumsetzungen über 90 % die Nickel-Anode der Brennstoffzelle regelmäßig oxidiert und damit deaktiviert wird.

Eigene Rechnungen zeigen, dass erst bei Erreichen von ca. 98 % des elektrochemischen Brennstoffumsatzes der $N_2$-Gehalt im $CO_2$-reichen Gas auf das tolerierbare Maß von ca. 10 % gesenkt wird (bei 96 % Brennstoffumsatz ca. 20 % $N_2$).

Man darf davon ausgehen, dass noch ein erheblicher Entwicklungsaufwand erforderlich ist, um dieses Ziel zu erreichen.

<u>Aufgabe und Lösung</u>

Die Aufgabe der Erfindung ist es, ein verbessertes Verfahren zur Erzeugung von elektrischer Energie mit Hilfe einer Festelektrolyt-Brennstoffzelle zur Verfügung zu stellen, bei dem ein hoher Wirkungsgrad erzielt wird und gleichzeitig die $CO_2$-Emissionen gesenkt werden. Ferner ist es die Aufgabe der Erfindung, eine zur Durchführung des vorgenannten Verfahrens geeignete Vorrichtung bereit zu stellen.

Die Aufgaben der Erfindung werden gelöst durch ein Verfahren mit der Gesamtheit an Merkmalen gemäß Hauptanspruch, sowie durch eine Vorrichtung mit der Gesamtheit an Merkmalen gemäß Nebenanspruch. Vorteilhafte Ausgestaltungen des Verfahrens und der Vorrichtung finden sich in den jeweils rückbezogenen Unteransprüchen.

<u>Gegenstand der Erfindung</u>

Gegenstand der Erfindung ist ein weiteres Anlagenkonzept mit dem Typ des elektrochemischen Nachbrenners. Bisher befand sich die konventionelle Nachverbrennung noch vor der $CO_2$-Kompression. Anhand der Reaktionsgleichungen für die Oxidation erkennt man aber nun, dass doppelt so viel $N_2$ eingeschleust wird als an $H_2$ und CO nachverbrannt wird (hoher $N_2$-Gehalt in der Luft: $O_2/N_2$ = ca. 1: 4) :

$$H_2 + {}^1/_2\, O_2 + 2\, N2 \rightarrow H_2O + 2\, N_2$$

$$CO + {}^1/_2\, O_2 + 2\, N_2 \rightarrow CO_2 + 2\, N_2$$

Es wurde überraschend gefunden, dass die Aufgabe der Erfindung dadurch gelöst werden kann, wenn die

Nachverbrennung erst nach der $CO_2$-Kompression durchgeführt wird. Die Menge an Ballast-Gasen, insbesondere an $N_2$, die für die $CO_2$-Verflüssigung regelmäßig sehr hinderlich ist, ist dann wesentlich geringer.

Ferner erlaubt die erfindungsgemäße Verfahrensführung einen Betrieb des aktiven elektrochemischen Nachbrenners mit geringerer Brennstoffnutzung, z. B. mit 96 % anstelle von 98 %. Die $H_2$-Konzentration am Ende des elektrochemischen Prozesses liegt dann regelmäßig bei einem etwa doppelt so hohen Wert verglichen mit dem bisherigen Konzept (etwa 4 statt 2 mol-%).

Der Vorteil dieser Anordnung besteht somit darin, dass die Materialprobleme am Ende des elektrochemischen Prozesses, die wegen der Gefahr einer Oxidation der Anode infolge des $H_2$-armen Betriebszustandes auftreten, deutlich gemildert werden. Die Chancen für die Realisierung eines Anlagenkonzeptes mit aktivem (stromliefernden) elektrochemischen Nachbrenner und somit hohem Wirkungsgrad werden damit erhöht.

In einer modifizierten Anlagenvariante wird das nach der $CO_2$-Kompression anfallende Restgas, das hauptsächlich aus $H_2$ und CO besteht, vor die SOFC zurückgeführt und kann auf diese Weise auch noch zur Stromerzeugung genutzt werden. Damit sind dann in der Regel sehr hohe Wirkungsgrade erreichbar.

## Spezieller Beschreibungsteil

Nachfolgend wird der Gegenstand der Erfindung anhand von Figuren und Ausführungsbeispielen näher erläutert, ohne dass der Gegenstand der Erfindung dadurch beschränkt wird.

Es zeigen die

Figur 1: SOFC mit Nachverbrennung des Anodengases (... , $H_2$, CO) mit Luft vor der $CO_2$-Kompression gemäß dem Stand der Technik

Figur 2: SOFC mit Nachverbrennung des Restgases ($H_2$, CO) aus der $CO_2$-Kompression mit Abluft der SOFC

Figur 3: SOFC mit Rückführung des Restgases ($H_2$, CO) aus der $CO_2$-Kompression vor die SOFC

In den Figuren 1 bis 3 bedeuten jeweils:

| | |
|---|---|
| I = | Inverter |
| K = | Kompressor |
| $CO_2$-K = | $CO_2$-Kompressor |
| W = | Vorwärmer |
| G = | Generator |
| SOFC 1 = | Haupt-SOFC (Brennstoffzelle bzw. Stapel) |
| SOFC 2 = | SOFC-Nachverbrenner |
| T = | Turbine |
| KW = | Konventionelle Nachverbrennung |

In Figur 1 ist das Konzept einer konventionellen Stromerzeugungsanlage mit einer Festelektrolyt-Brennstoffzelle zu sehen. Der SOFC werden einerseits Erdgas als wasserstoffhaltiges Brenngas sowie komprimierte Luft (K) als Oxidationsmittel zugeführt. Die Luft wird über einen Wärmeaustauscher (W) durch den kathodenseitigen Abgasstrom vorgewärmt. Neben der Haupt-SOFC (SOFC 1) werden die nicht vollständig umgesetzten Gase einer weiteren SOFC als Nachbrenner (SOFC 2) zugeführt. Das kathodenseitige Abgas treibt zunächst eine Turbine (T) an und dient der Vorwärmung der Luft. Das anodenseitige Abgas wird zusammen mit frischer Luft einem konventionellen Nachbrenner (KN) zugeführt. Das nun ebenfalls $N_2$ enthaltende heiße Abgas wird abgekühlt. Der Wasserdampf wird auskondensiert und das restliche Abgas gelangt anschließend in eine Verdichter-/Verflüssigungseinheit ($CO_2$-K), wo das $CO_2$ vom $N_2$ abgetrennt wird.

Die Figur 2 zeigt das Konzept einer erfindungsgemäßen Ausführung des Verfahrens zur Erzeugung von elektrischer Energie mittels einer SOFC. Das Fließbild unterscheidet sich von Figur 1 insoweit, als die Nachverbrennung des anodischen Abgases erst nach der Abtrennung des $CO_2$ ($CO_2$-K) zusammen mit dem kathodischen Abgas erfolgt. Ohne zuvor zugeführtes $N_2$ kann einerseits die $CO_2$-Abtrennung aus dem anodischen Abgas deutlich effektiver durchgeführt werden. Andererseits kann auch eine elektrochemische Nachverbrennung mit deutlich geringerer - und damit materialtechnisch weniger problematischer - Umsetzung der Restgase $H_2$ und CO toleriert werden.

Figur 3 zeigt eine weitere Ausgestaltung der Erfindung. Hier wird aus dem anodischen Abgas ebenfalls zunächst das $CO_2$ abgetrennt ($CO_2$-K). Das restliche Abgas, welches nun noch CO und $H_2$ aufweist, wird nun nicht wie in Figur 2 nachverbrannt, sondern der Haupt-SOFC (SOFC 1) als Brennstoff wieder zugeführt. Bei dieser Variante bedarf es vorteilhaft keiner weiteren Nachverbrennungseinheit und keines weiteren Wärmeaustauschers.

## Patentansprüche

1. Verfahren zur Erzeugung von elektrischer Energie mit Hilfe einer Festelektrolyt-Brennstoffzelle (SOFC), die mit wasserstoffhaltigem Brennstoff betrieben wird und bei dem aus dem Anodenabgasstrom, umfassend wenigstens $H_2$ und $CO_2$, das $CO_2$ weitgehend durch Verflüssigung entfernt wird,
**dadurch gekennzeichnet,**
**dass** nach der Verflüssigung des $CO_2$ das verbliebene Restgas oxidiert wird.

2. Verfahren nach Anspruch 1, bei dem das Restgas in einer elektrochemischen Nachverbrennung mit Sauerstoff weitgehend oder vollständig oxidiert wird.

3. Verfahren nach einem der Ansprüche 1 bis 2, bei dem die gegebenenfalls nachgeschaltete konventionelle Nachverbrennung zusammen mit dem Kathodenabgas erfolgt.

4. Verfahren nach Anspruch 1, bei dem das Restgas in eine Brennstoffzelle eingeleitet und dort weitgehend oxidiert wird.

5. Verfahren nach Anspruch 4, bei dem das Restgas in die SOFC zurückgeführt wird.

6. Verfahren nach einem der Ansprüche 1 bis 5, bei dem die Abgase der SOFC zunächst einer weiteren SOFC als Nachbrenner zugeleitet werden.

7. Vorrichtung zur Durchführung des Verfahrens nach Anspruch 1 bis 6, umfassend eine Festelektrolyt-Brennstoffzelle und eine $CO_2$-Verdichtungs-/Verflüssigungseinheit,
**dadurch gekennzeichnet,**
**dass** eine Rückführung der Restgase aus der $CO_2$-Verdichtungs-/Verflüssigungseinheit in die SOFC vorgesehen ist.

8. Vorrichtung zur Durchführung des Verfahrens nach Anspruch 1 bis 6, umfassend eine Festelektrolyt-Brennstoffzelle, eine $CO_2$-Verdichtungs-/Verflüssigungseinheit sowie einen Nachbrenner,
**dadurch gekennzeichnet, dass** der Nachbrenner der $CO_2$-Verdichtungs-/Verflüssigungseinheit nachgeschaltet ist.

9. Vorrichtung nach Anspruch 8, bei dem eine Zuleitung der Kathodenabgase in den Nachbrenner vorgesehen ist.

10. Vorrichtung nach einem der Ansprüche 7 bis 10, mit einer zusätzlichen zweiten SOFC, die der ersten SOFC nachgeschaltet ist, und Leitungen, die das anoden- und kathodenseitige Abgas der ersten SOFC zur zweiten SOFC zu leiten vermögen.

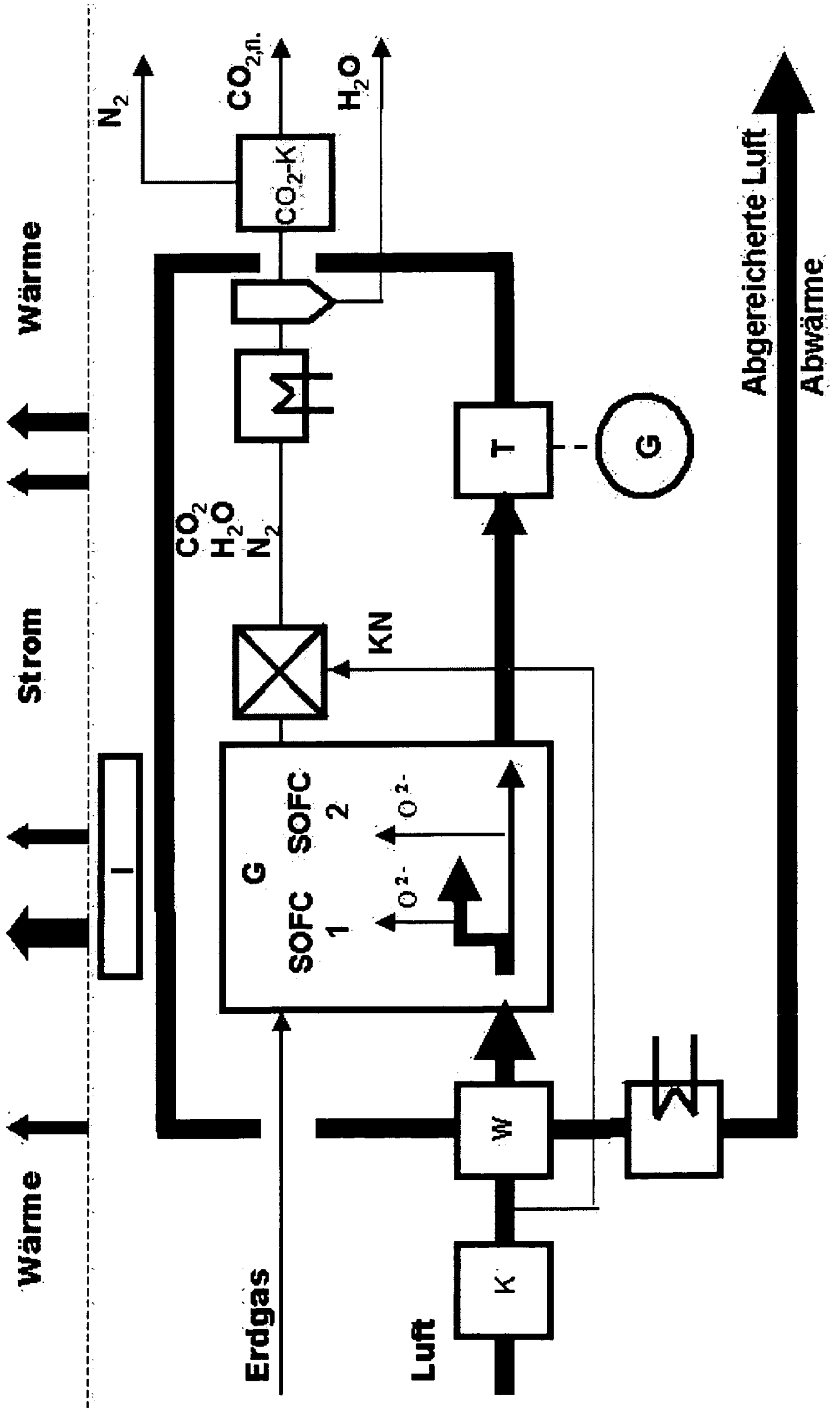

Wärme
Strom
Wärme
N$_2$
CO$_{2,fl.}$
H$_2$O
CO$_2$-K
CO$_2$ H$_2$O N$_2$
KN
T
G
G
SOFC 1
SOFC 2
O$^{2-}$
O$^{2-}$
I
Erdgas
Luft
K
W
Abgereicherte Luft
Abwärme


Figur 1

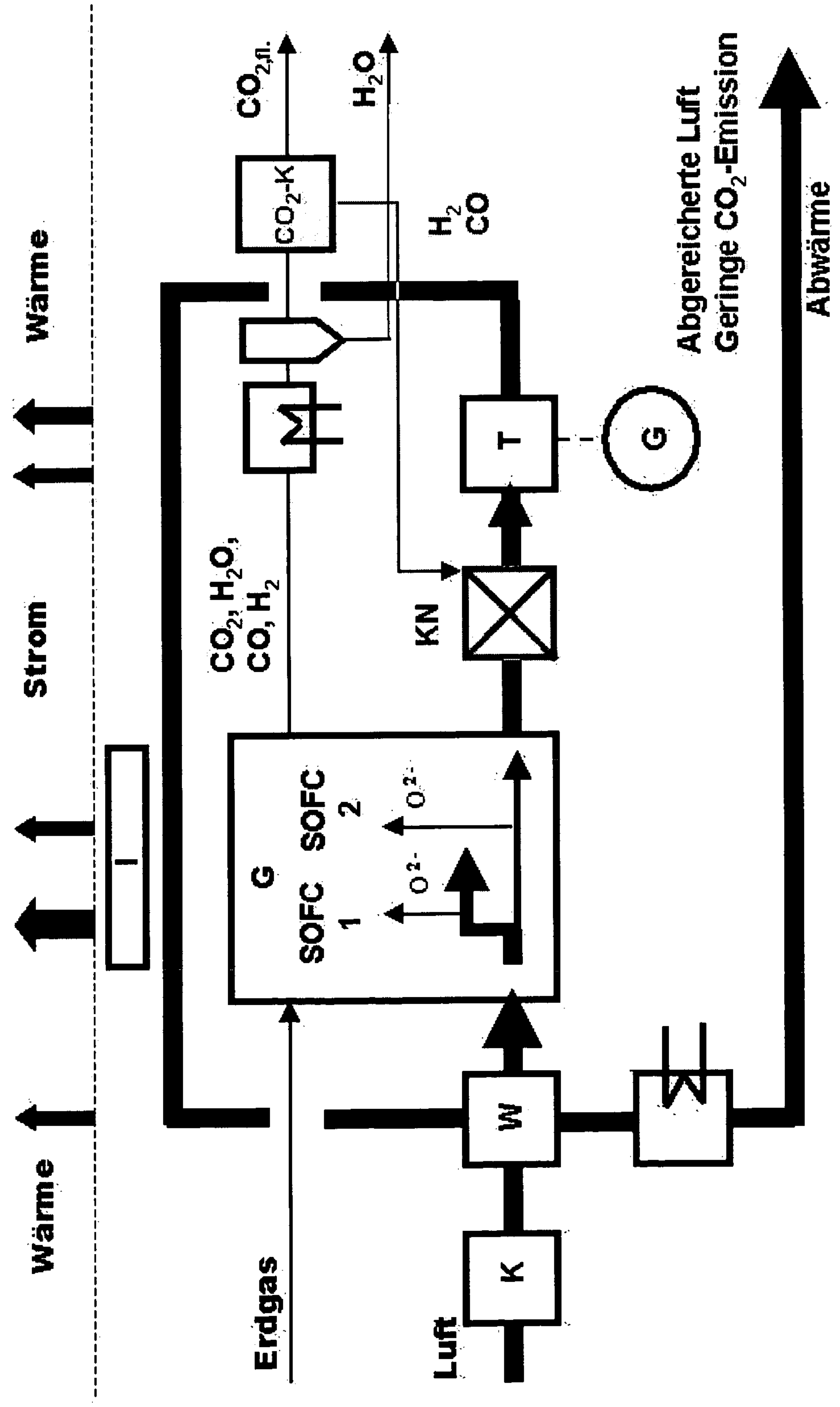
Wärme
I
Strom
Wärme
Erdgas
Luft
K
W
G
SOFC 1
SOFC 2
$O^{2-}$
$O^{2-}$
$CO_2$, $H_2O$, CO, $H_2$
KN
T
G
$CO_2$-K
$CO_{2,fl.}$
$H_2O$
$H_2$
CO
Abgereicherte Luft
Geringe $CO_2$-Emission
Abwärme

Figur 2

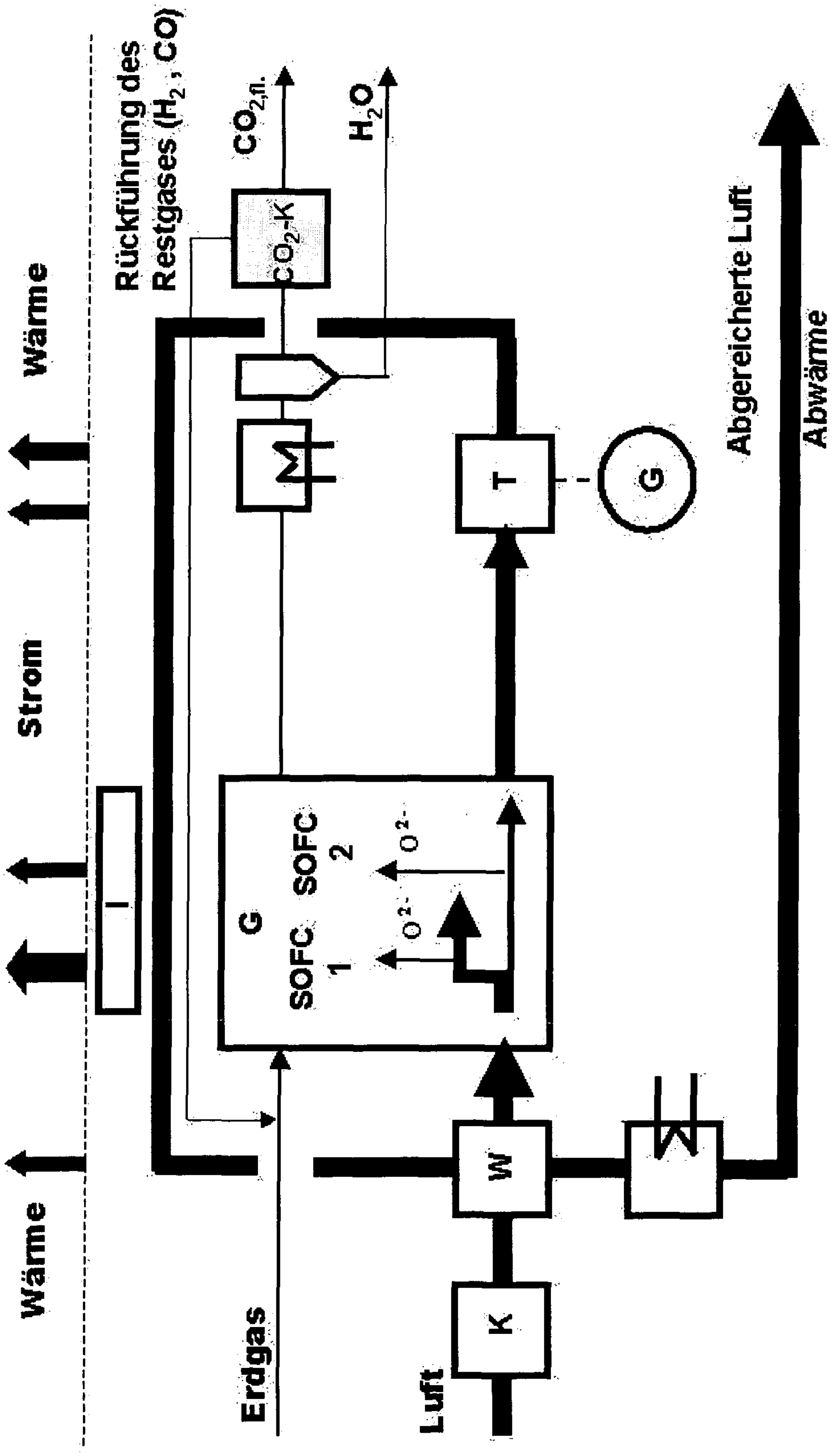
Wärme
Strom
Wärme
I
Rückführung des Restgases ($H_2$, CO)
$CO_{2,fl.}$
$H_2O$
$CO_2$-K
G
SOFC 1
SOFC 2
$O^{2-}$
$O^{2-}$
T
G
Erdgas
Luft
K
W
Abgereicherte Luft
Abwärme

Figur 3